Europäisches Patentamt

European Patent Office

Office européen des brevets

(11) Publication number: **0 110 603**
A2

# EUROPEAN PATENT APPLICATION

(21) Application number: 83306888.5

(22) Date of filing: 11.11.83

(51) Int. Cl.³: **A 61 J 3/07**

(30) Priority: 23.11.82 US 444007

(43) Date of publication of application: 13.06.84
Bulletin 84/24

(84) Designated Contracting States: **AT BE CH DE FR GB IT LI LU NL SE**

(71) Applicant: **WARNER-LAMBERT COMPANY, 201 Tabor Road, Morris Plains New Jersey 07950 (US)**

(72) Inventor: **Wittwer, Fritz, Bündtenstrasse 11, CH-4411 Lupsingen (CH)**
Inventor: **van Herle, Louis, Mastrendreet, 36, B-2243 Zandhoren (BE)**

(74) Representative: **Jones, Michael Raymond et al, HASELTINE LAKE & CO. 28 Southampton Buildings Chancery Lane, London WC2A 1AT (GB)**

(54) Apparatus for and method of sealing capsules.

(57) A method is disclosed for the sealing of gelatin or other hydrophilic polymer capsules having hard shell coaxially aligned cap and body parts which are telescopically joined to define overlapping regions.

The method comprises depositing, at high frequency from a jet, between the overlapping regions of the cap and body parts, droplets of a sealing fluid to seal together the cap and body parts.

An apparatus for performing the method is also disclosed.

EP 0 110 603 A2

-1-

APPARATUS FOR AND METHOD OF SEALING CAPSULES

This invention relates to a method of and apparatus for sealing capsules, using a jet to deposit sealing fluid and with a means for controlling the amount of sealing fluid deposited, and to a capsule sealed thereby.

The capsules sealed by the method and apparatus of the present invention are hard shell, telescopically joined capsules, having coaxial cap and body parts. The capsules are made of gelatin or other hydrophilic polymer materials whose properties are pharmaceutically acceptable.

Capsules have a disadvantage when compared with other dosage forms, in that cap and body parts can be opened and rejoined without the disruption becoming externally visible. Therefore, the consumer has no real guarantee that the contents of a capsule have not been tampered with and that the contents will actually agree with the manufacturer's statement. Until now a reliable method of prevention against tampering with hard shell gelatin or other hydrophilic

0110603

polymer material capsules has not been known.

Tamper-proof capsules have been recently developed which provide a total overlap by the cap side wall of the body side wall so as to impede gripping of the body closed end which makes separation of the two portions more difficult.

In our co-pending European Patent Application No. 83305331.7 a method of, and apparatus for sealing capsules, using a sealing fluid is disclosed. The sealing fluid can be brought into contact with the overlapping region of the cap and body portions by: spraying the capsule with the sealing fluid; exposing the capsule to the sealing fluid in a steam chamber; or dipping the capsule in the sealing fluid. The sealing fluid being directed to the overlap region and between the parts by capillary action.

The present invention discloses a method of sealing capsules in order to enhance tamper-proofing of capsules.

According to the first aspect of the present invention there is provided a method of sealing a capsule made from gelatin and/or another hydrophilic polymer, having hard shell coaxially aligned cap and body parts which are telescopically joined to define overlapping regions, which method comprises depositing, at high-frequency from a jet, between the overlapping regions of the cap and body parts, droplets of a sealing fluid, to seal together the cap and body parts.

The jet employed in this aspect of the present invention may be of the pressure pulse jet nozzle type with accurate monitoring of droplet delivery and deflection.

In the method of this aspect of the present invention

0110603

the capsule is preferably axially aligned with the cap down so that the action of gravity and capillary action distribute the sealing fluid between the overlapping regions of the capsule parts.

The capsule may be axially aligned with the cap down so that the action of gravity and capillary action cause the sealing fluid injected into the overlapping region to quickly disperse between the overlapping capsule side walls. Despite the small amount of sealing fluid, the capillary action

produces not only a relatively large sealing fluid dispersion area, but also a quick polymerization and drying which causes the immediate development of a firm seal at the overlapping seam of the capsule.

Surfactants can also be added to the sealing fluid to facilitate dispersion.

The sealing fluid employed in the present invention are cyanoacrylate-monomer, polyvinylalcohol solutions or polyvinylpyrollidone in water, or nitrocellulose in acetone or methylacetate and/or ethylacetate. A viscosity ranging from 1.5 to 5 cP ($mN\ s/m^2$) is preferred.

According to a second aspect of the present invention there is disclosed a hardshell gelatin or other hydrophilic polymer capsule comprising cap and body parts which have been telescopically joined with a wall of one part overlapping a wall of the other part, and sealed by a method according to the first aspect of the present invention.

The capsules of the second aspect of the present invention may be filled with one or more of the following: powder; a paste; tablets; pellets; granules or micro-capsules; a liquid; and a solid and a liquid.

According to a further aspect of the present invention, there is provided an apparatus for sealing hard shell gelatin or other hydrophilic polymer capsules having coaxially aligned cap and body parts which are telescopically joined to define overlapping regions, the apparatus comprising:

means for holding the capsules; and

one or more jets for depositing, at high frequency, in the overlapping regions, droplets of a sealing fluid, the jets being provided with a means for controlling the amount of sealing fluid deposited.

For a better understanding of the present invention and to show how the same may be carried into effect, reference will now be made, by way of example, to the accompanying drawings, in which:-

Figure 1 shows a single jet directing a stream of droplets onto a capsule in the cap down position;

Figure 2 shows a single jet directing a stream of droplets onto a rotating capsule in the cap down position; and

Figure 3 shows two jets directing a stream of droplets onto a capsule in the cap down position.

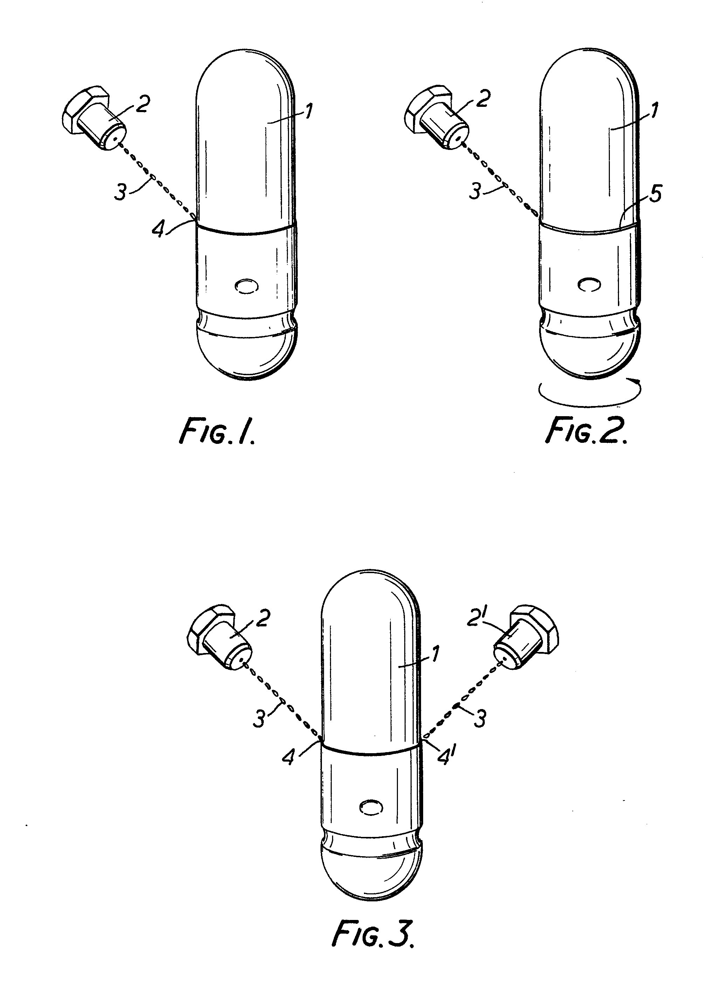

Referring to Figure 1, a filled and telescopically joined capsule 1 is positioned by a holder (not shown) in an axially cap down position. A sealing fluid 3 is delivered by pressure through a pressure pulse jet nozzle 2. The nozzle 2 is pre-set to deposit the sealing fluid directly between the seam 4 of the overlapping capsule parts.

The sealing fluid is delivered through the nozzel 2 under pressure which is interrupted or pulsed so as to deliver the fluid as droplets 3 from the nozzle 2 at high-frequency of about 4 Hz. The droplets are deposited on the capsule as spheroidal dots having a diameter between about 0.03 to 0.4 mm. These droplets 3 run together so as to form a continuous film deposited on the seam 4. Sealing may be performed with the capsule either in an axially cap down position or in an axially body down position as the capillary forces between the overlap of body and cap are sufficient for the distribution of the sealing fluid between body and cap to form a seal therein.

In Figure 1 the nozzle 2 is depositing droplets 3 on a capsule 1 which is axially cap down. The nozzle 2 is at approximately a 45° angle to the axis of the capsule 1. In this embodiment the capsule is oriented with the closed end of the cap downward and the open end of the cap upward to receive the body part. In this way the sealing fluid is deposited at the edge of the open end of the cap, and the sealing fluid flows downward by gravity and by capillary action between the cap and body side walls so as to form a tight seal therein.

Referring now to Figure 2, which shows the nozzle 2 depositing the droplets 3 on a capsule 1 which is axially cap down and is axially rotated so that the droplets 3 form a continuous seam 5 along the overlap between the side wall of the cap and the side wall of the body. The sealing fluid flows downward by gravity and by capillary action between the overlap of the cap and body parts so as to form a tight bond and completely seal the seam between body and cap parts of the capsule 1.

Referring now to Figure 3 which shows two nozzles 2 and 2', depositing droplets on spots 4 and 4' which are on opposite sides of the capsule 1 which is axially cap down and stationary.

A two-spot sealing is obtained by this procedure.

Each nozzle can deliver between 1 and 10 microlitres of sealing fluid per capsule.

The nozzles can be adjusted to give the desired time period of exposure of each capsule to the sealing  fluid and the time period can be varied to increase or decrease the amount of sealing fluid deposited, in order to conform to the configuration and size of each capsule. The viscosity limitations are important and are dependent upon the apparatus, the method and the configuration of the capsule.  Therefore, the viscosity must be determined for each specific case.  The viscosity normally ranges between 1.5 (or 2) and 20 cP (mN s/m$^2$)

Any attempt to mechanically separate the sealed    capsule parts from one another will automatically cause the destruction of the capsule. A consumer will therefore be able to see any attempts at tampering with a capsule.

The following Examples illustrate the present invention.

Example 1

Three microlitres of cyanolite 101 R (methyl-cyanoacrylate) were injected into the open end of the cap part and along the body side wall of a hard gelatin capsule (with the parts joined), by means of a jet nozzle.  The nozzle was directed at a 45° angle to the axis of the capsule which was in an axially cap down position.  In this way, the sealing fluid was precisely injected into the seam and was quickly dispersed by capillary forces between the overlap of the cap and body parts.

Because cyanoacrylate polymerizes in the presence of moisture, the jet nozzle was kept dry by a constant flow of dry air at 25°C and

0110603

10% relative humidity. Because the capsule itself contains 12 to 16% water, the immediate polymerization of the fluid took place on the overlapping surfaces of the capsule walls without making any increase in temperature necessary.

The capsule parts could not be separated without destroying the capsules.

Example 2

In a similar manner to Example 1, a polyvinylpyrrolidone solution in water with a viscosity of 10 cP (mN s/m$^2$) was sprayed on the capsule seam. The application amount was 5 microlitres.

The capsule was bound together so tightly that a separation was impossible without destroying the capsule.

0110603

CLAIMS:

1. A method of sealing a capsule made from gelatin and/or another hydrophilic polymer, having hard shell coaxially aligned cap and body parts which are telescopically joined to define overlapping regions, which method comprises depositing, at high-frequency from a jet, between the overlapping regions of the cap and body parts, droplets of a sealing fluid, to seal together the cap and body parts.

2. A method according to Claim 1, wherein the capsule is axially aligned with the cap down so that the action of gravity and capillary action distribute the sealing fluid between the overlapping regions of the capsule parts.

3. A method according to Claim 1 or 2, wherein the capsule is axially rotated while the droplets of sealing fluid are deposited continuously along a seam defined by the overlapping regions of the capsule parts.

4. A method according to any preceding claim, wherein the high frequency is about 4 Hz.

5. A method according to any preceding claim, wherein the sealing fluid has a viscosity in the range from 1.5 to 5 cP (1.5-5mN s/m$^2$).

6. A method according to any preceding claim, wherein the sealing fluid is chosen from: cyanoacrylate-monomer; polyvinyl alcohol solutions; polyvinylpyrollidone in water; or nitrocellulose in acetone or methylacetate and/or ethylacetate.

7. A method according to any preceding claim, wherein a surfactant is added to the sealing fluid.

8. A hardshell gelatin or other hydrophilic polymer capsule comprising cap and body parts which have been telescopically joined with a wall of one part overlapping a wall of the other

0110603

part, and sealed by a method according to any preceding claim.

9. A capsule as claimed in Claim 8, which is filled with one or more of the following: powder; a paste; tablets; pellets; granules or micro-capsules; a liquid; and a solid and a liquid.

10. An apparatus for sealing hard shell gelatin or other hydrophilic polymer capsules having coaxially aligned cap and body parts which are telescopically joined to define overlapping regions, the apparatus comprising:

means for holding the capsules; and

one or more jets for depositing, at high frequency, in the overlapping regions, droplets of a sealing fluid, the jets being provided with a means for controlling the amount of sealing fluid deposited.

1/1

0110603

FIG.1.

FIG.2.

FIG.3.